# EUROPÄISCHE PATENTSCHRIFT

(11) **EP 1 734 283 B1**
(45) Veröffentlichungstag und Bekanntmachung des Hinweises auf die Patenterteilung: **26.08.2009**
(21) Anmeldenummer: 06112975.5
(22) Anmeldetag: 24.04.2006
(51) Int. Cl.: F16H 7/08

(54) **Spannvorrichtung zum Spannen eines endlosen Übertragungsmittels**
Clamping device for clamping of an endless transferring member
Dispositif de serrage pour la fixation d' un élément de transmission sans fin

(30) Priorität: 15.06.2005 DE 102005027648
(43) Veröffentlichungstag der Anmeldung: 20.12.2006
(73) Patentinhaber: ROBERT BOSCH GMBH, 70442 Stuttgart (DE)
(72) Erfinder: Vollmer, Martin, 70469 Stuttgart-Feuerbach (DE); Strauss, Steffen, 70839 Gerlingen (DE)

(56) Entgegenhaltungen:
- EP-A- 0 837 264
- DE-A1- 10 038 606
- DE-A1- 10 155 370
- DE-A1- 19 943 402
- DE-C1- 19 959 594
- US-A- 4 539 001

## Beschreibung

### Stand der Technik

Die Erfindung geht aus von einer Spannvorrichtung zum Spannen eines endlosen Übertragungsmittels, wie Kette oder Riemen, insbesondere einer Endloskette eines Kettentriebs einer Brennkraftmaschine zum Antreiben mindestens einer Nockenwelle durch eine Kurbelwelle, nach dem Oberbegriff des Anspruchs 1, und wie sie aus der DE 199 595 94 C bekannt ist.

Eine solche Spannvorrichtung dient zum Straffen des zwischen mindestens zwei Umlenkrädern umlaufenden Übertragungsmittels, wie Riemen oder Kette, zwecks Vermeiden von Schwingungen und Flatterbewegungen des Übertragungsmittels im Bereich zwischen den Umlenkrädern. Damit wird auch ein Riemenschlupf oder bei Ketten ein Überspringen von Zähnen auf den als Stirnräder ausgebildeten Umlenkrädern vermieden, was zu einem nicht tolerierbaren Versatz der Drehstellungen der Umlenkräder zueinander führen würde.

Eine bekannte Spannvorrichtung für Riemen oder Ketten (DE 41 33 560 A1) besitzt zum Spannen und Dämpfen der Schwingungen und Flatterbewegung des Übertragungsmittels einen das Übertragungsmittel mittels Federkraft spannenden Spannkolben und eine vom Spannkolben begrenzte Druckkammer, die über ein Rückschlagventil mit einem unter Versorgungsdruck stehendem Fluid füllbar ist. Der Spannkolben ist in einem zylinderförmigen Gehäuse geführt, und zwischen Spannkolben und Zylinderwand des Gehäuses ist ein bis zum Kolbenaustrittsende des Gehäuses reichender Leckspalt vorhanden, der über eine Bohrung mit der Druckkammer in Verbindung steht. Wird der Spannkolben von dem Übertragungsmittel in das Gehäuse hineingeschoben, so sucht er das Kammervolumen der Druckkammer zu verkleinern und schiebt eine entsprechende Menge des inkompressiblen Fluidvolumens über den Leckspalt aus, und die Fluidreibung im Leckspalt führt zu einer Dämpfung der Verschiebebewegung des Spannkolbens.

Um die Temperaturabhängigkeit der Viskosität des Fluids, die zu einer mit zunehmender Temperatur abnehmenden Dämpfung des Spannkolbens führt, zu kompensieren, ist im Spannkolben ein zweites Rückschlagventil integriert, das vom Fluiddruck in der Druckkammer beaufschlagt ist und bei Öffnen eine Verbindung zwischen der Druckkammer und einem zweiten Leckspalt herstellt, dessen bis zum Kolbenaustrittsende des Gehäuses reichende Axiallänge gegenüber der Axiallänge des ersten Leckspalts reduziert ist. Bei kaltem Fluid mit hoher Viskosität ist infolge der Fluidreibung in dem ersten langen Leckspalt der Druck in der Druckkammer beim Einschieben des Spannkolbens größer als bei warmem Fluid mit geringer Viskosität. Der höhere Druck führt zu einem Öffnen des zweiten Rückschlagventils und damit zu einer Verringerung der Fluidreibung im kürzeren zweiten Leckspalt. Auf diese Weise wird erreicht, dass die Dämpfung des Spannkolbens durch die Druckkammer weitgehend unabhängig von der Temperatur des Fluids ist.

Bei einer ebenfalls bekannten Spannvorrichtung mit einstellbarem Dämpfungsverhalten zum Spannen von endlosen Übertragungsmitteln, wie Ketten oder Riemen, (DE 202 02 663 U1) ist wiederum ein mit Federkraft das Übertragungsmittel beaufschlagender Spannkolben in einem Gehäuse axial verschieblich geführt und begrenzt im Gehäuse mit seiner von dem Übertragungsmittel abgekehrten Stirnseite eine Druckkammer. Die Druckkammer ist über ein Rückschlagventil mit einem unter Versorgungsdruck stehenden Fluid füllbar und weist hierzu eine Entlüftungsöffnung auf. Die Druckkammer ist weiterhin an einem schnellschaltendem 2/2-Wege-Magnetventil angeschlossen, das im Schließzustand die Druckkammer absperrt und im Öffnungszustand die Druckkammer über eine Fluid-Rückführleitung mit einem Fluidreservoir verbindet. Das Magnetventil wird abhängig von Betriebsparametern, wie Viskosität, Temperatur und Versorgungsdruck des Fluids, Spannung des Übertragungsmittels und/oder Beschleunigung oder Weg des Übertragungsmittels gesteuert. Durch den Schaltzustand des Ventils wird die Dämpfungswirkung der Spannvorrichtung eingestellt. Bei geschlossenem Ventil stellt die Druckkammer ein abgeschlossenes, im wesentlichen ungedämpftes Hydraulikfederelement dar. Durch abwechselndes Öffnen und Schließen des Ventils wird - ausgehend von der abgeschlossenen Druckkammer - das Dämpfungsverhalten der Spannvorrichtung verändert, so dass unabhängig von dem in der Druckkammer herrschenden Fluiddruck die Dämpfung der Spannvorrichtung an den momentanen Betriebszustand angepasst wird. Alternativ ist das 2/2-Wege-Magnetventil durch ein 2/2-Wege-Proportionalventil ersetzt, das eine beliebige Stellung zwischen Offen- und Geschlossenstellung einnehmen kann, so dass das Dämpfungsverhalten nahezu stufenlos in Abhängigkeit von der Schaltstellung eingestellt werden kann.

### Vorteile der Erfindung

Die erfindungsgemäße Spannvorrichtung mit den Merkmalen des Anspruchs 1 hat den Vorteil, dass die Dämpfung der Schwingungen des Übertragungsmittels durch die Spannvorrichtung je nach Betriebszustand variiert und die Variabilität selbstregeln ausschließlich durch die konstruktive Gestaltung der Leckstelle ohne zusätzliche, kostenintensive Maßnahmen, wie Aktuatorik, Sensorik und Steuergerät, erreicht wird. Insbesondere kann durch die Zuordnung der konstruktiv ausgebildeten Leckstelle zur Verschiebeposition des Spannkolbens erreicht werden, dass im Bereich der Resonanzstelle des Übertragungsmittels ein sog. "Aufpumpen" der Spannvorrichtung mit einhergehendem, verstärkten Spannen des Übertragungsmittels und der dadurch bedingten erhöhten Zugbelastung und Reibung des Übertragungsmittels vermieden wird und der Spannkolben mit annähernd gleich großer Spannkraft wie in anderen Drehzahlbereichen des Übertragungsmittels auf das Übertragungsmittel wirkt.

Dieses bei bekannten Spannvorrichtungen im Resonanzbereich des Übertragungsmittels auftretende "Aufpumpen" kommt dadurch zustande, dass durch die starken Anregung des Spannkolbens infolge starken Schwingens des Übertragungsmittels im Resonanzbereich vom Spannkolben mehr Fluid über den großen Querschnitt des Rückschlagventils in die Druckkammer eingesaugt wird als Fluid über die Leckstelle abfließen kann. Dadurch steigt der Druck in der Druckkammer und der Spannkolben verschiebt sich in Richtung Übertragungsmittel mit der Folge des ungewollten verstärkten Spannens des Übertragungsmittels. Der Bereich der Resonanzstelle des Übertragungsmittels ist bei Kettentrieben für Brennkraftmaschinen vom Typ der Brennkraftmaschine abhängig und liegt beispielsweise bei einer Drehzahl der Brennkraftmaschine zwischen 4000 und 5500 U/min. Die auf das Übertragungsmittel wirkende hohe Spannkraft der Spannvorrichtung führt aufgrund der damit verbundenen großen Zugbelastung und großen Reibung des Übertragungsmittels zu hohem Verschleiß und hohem Geräuschniveau.

Durch die in den weiteren Ansprüchen aufgeführten Maßnahmen sind vorteilhafte Weiterbildungen und Verbesserungen der im Anspruch 1 angegebenen Spannvorrichtung möglich.

Durch die damit einhergehende größere Auslenkung des Spannkolbens und die größeren Volumenströme des abfließenden Fluids wird eine niedrige Dämpfung erzielt, durch die mehr Energie abgebaut wird. Der mittlere Druck in der Druckkammer beim Schwingen des Übertragungsmittels wird begrenzt und damit die auf das Übertragungsmittel wirkende Kraft der Spannvorrichtung reduziert.

Gemäß einer vorteilhaften Ausführungsform der Erfindung ist der Spannkolben in einem Gehäuse axial verschiebbar angeordnet, das an seinem dem Übertragungsmittel zugekehrten Ende zum Ausschieben des Spannkolbens offen ist, und die Leckstelle ist im Gehäuse und/oder im Spannkolben ausgebildet. Die Geometrie der nur im Gehäuse oder nur im Spannkolben oder teilweise im Gehäuse und im Spannkolben realisierten Leckstelle, die stets in der Druckkammer mündet, kann sehr unterschiedlich ausgebildet sein, so z.B. als in Verschieberichtung des Spannkolbens angeordnete Reihe von beabstandeten Entlastungsöffnungen, die von der Stirnkante des Spannkolbens oder von einer am Spannkolben angeordneten Abdeckblende gesteuert wird, oder als Axialnut im Gehäuse oder im Spannkolben mit im Endbereich sich stetig oder stufig verringernder Nuttiefe.

Gemäß einer bevorzugten Ausführungsform der Erfindung ist im Spannkraft-Übertragungspfad zwischen Spannkolben und Übertragungsmittel ein Längenausgleichskolben zur Kompensation alterungsbedingt auftretender Längungen des Übertragungsmittels angeordnet. Durch diesen Längenausgleichskolben, der zu dem die selbstregelnde Dämpfungsrate bewirkenden Spannkolben hinzugeschaltet ist, sind in der Spannvorrichtung die Funktionen "Spannen und Längenausgleich des Übertragungsmittels" und die Funktion "Dämpfung der Schwingungen des Übertragungsmittels" getrennt und damit separat einstellbar. Mit dieser konstruktiven Ergänzung der Spannvorrichtung können extreme Längenänderungen des Übertragungsmittels, wie sie z.B. an einem neuen Übertragungsmittel durch Alterung im Langzeitbetrieb auftreten können, besser beherrscht werden.

### Zeichnung

Die Erfindung ist anhand von in der Zeichnung dargestellten Ausführungsbeispielen in der nachfolgenden Beschreibung näher erläutert. Es zeigen jeweils in schematisierter Darstellung:
- Fig. 1: eine Seitenansicht eines Kettentriebs einer Brennkraftmaschine mit einer Spannvorrichtung für die Endloskette,
- Fig. 2: einen Längsschnitt der Spannvorrichtung in Fig. 1 und einen vereinfacht dargestellten Querschnitt der Spannvorrichtung gemäß Linie A-A,
- Fig. 3 bis 11: jeweils eine gleiche Darstellung wie in Fig. 2 von Ausführungsbeispielen der Spannvorrichtung mit modifizierter Leckstelle,
- Fig. 12: einen Längsschnitt eines weiteren Ausführungsbeispiels der Spannvorrichtung,
- Fig. 13: eine schematisierte Darstellung der Spannvorrichtung in Fig. 12 bei Einwirkung auf eine neue Kette (Fig. 13a) und auf eine alterungsbedingt gelängte Kette (Fig. 13b),
- Fig. 14: eine schematisierte Darstellung der Spannvorrichtung in Fig. 12 zur Illustrierung der Dämpfung der Kettenschwingungen mit niedriger Dämpfung,
- Fig. 15: eine schematisierte Darstellung der Spannvorrichtung in Fig. 12 zur Illustrierung der Dämpfung der Kettenschwingungen mit hoher Dämpfung.

### Beschreibung der Ausführungsbeispiele

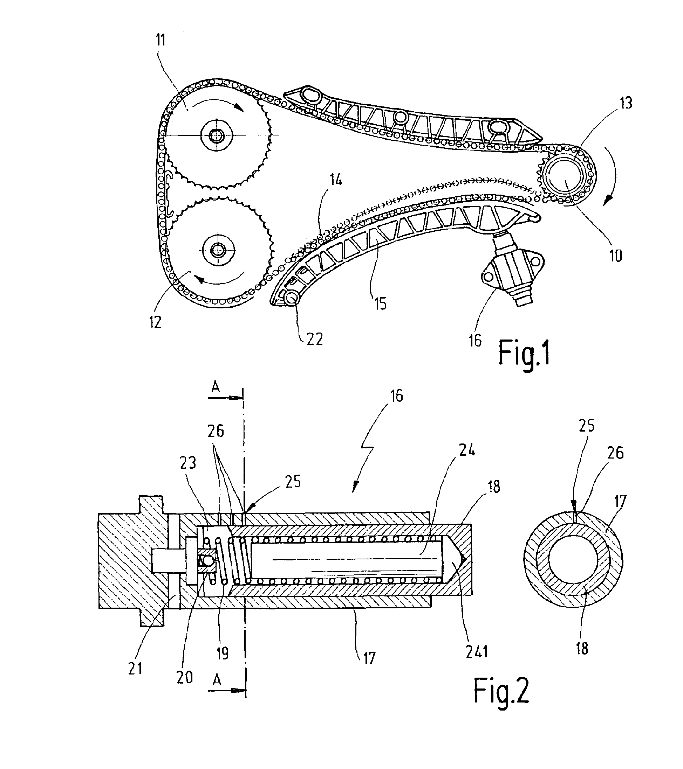

In Fig. 1 ist schematisch ein Kettentrieb einer Brennkraftmaschine zum Steuern der Gaswechselventile in den Verbrennungszylindern der Brennkraftmaschine dargestellt. Die Gaswechselventile werden über Nocken von Nockenwellen im Arbeitstakt geöffnet und geschlossen und hierzu im Ausführungsbeispiel zwei Nockenwellen von einer von der Brennkraftmaschine gedrehten Kurbelwelle 10 angetrieben. Auf jeder Nockenwelle sitzt drehfest ein Stirnrad 11 bzw. 12 und auf der Kurbelwelle 10 sitzt drehfest ein Antriebszahnrad 13. Über Antriebszahnrad 13 und Stirnräder 11, 12 ist eine Endloskette 14 gelegt. Bei Rotation der Kurbelwelle 10 werden von dem mit Drehzahl umlaufenden Antriebszahnrad 13 die beiden Stirnräder 11, 12 und damit die Nockenwellen mit halber Drehzahl angetrieben.

Die Endloskette 14 läuft über mindestens eine Führungsschiene oder einen Gleitschuh 15, an der bzw. an dem eine Spannvorrichtung 16 zum Straffen desjenigen Kettenbereichs angreift, der von dem Antriebszahnrad 13 abläuft und auf das Stirnrad 12 aufläuft. Die Spannvorrichtung 16 dient einmal zum Spannen der Endloskette 14 und zur Kompensation von Längenänderungen der Endloskette 14 über deren Lebensdauer, die z. B. durch Verschleiß und anderen Belastungen alterungsbedingt auftreten. Das Spannen der Endloskette 14 und die Kompensation deren Längenänderung sorgt für ein spielfreies Einstellen der Endloskette 14 und damit zu einem geringen Verschleiß und einer geringen Geräuschentwicklung. Eine weitere Aufgabe der Spannvorrichtung 16 ist die Dämpfung der Kettenschwingungen, die durch Drehungleichförmigkeiten angeregt werden. Dabei soll insbesondere ein Überspringen von Zähnen verhindert werden, da sonst die Zuordnung der Drehstellung der Nockenwellen zur Drehstellung der Kurbelwelle 10 nicht mehr gegeben ist, was eine Verbrauchs- und/oder Emissionsverschlechterung nach sich zieht und ggf. sogar zu mechanischen Beschädigungen des Motors führt, da beispielsweise die sich öffnenden Ventile mit dem im Verbrennungszylinder der Brennkraftmaschine sich aufwärts bewegende Hubkolben in Berührung kommen können.

Wie in Fig. 2 schematisiert im Schnitt dargestellt ist, umfasst die Spannvorrichtung 16 ein zylinderförmiges Gehäuse 17, das an einem Gehäuseende offen ist, einen im Gehäuse 17 axial verschiebbaren Spannkolben 18, eine den Spannkolben 18 beaufschlagende Druckfeder 19, ein Rückschlagventil 20 und einen am Gehäuse 16 ausgebildeten Hydraulikanschluss 21 zum Zuführen eines unter Versorgungsdruck stehenden Fluids. Im Falle der Brennkraftmaschine wird als Fluid Öl aus dem Motorölkreislauf verwendet, das unter einem Versorgungsdruck von bis zu 6 bar steht. Der Spannkolben 18 tritt am offenen Ende des Gehäuse 17 aus diesem heraus und liegt unter der Wirkung der Druckfeder 19 an dem Gleitschuh 15 an. Der Gleitschuh 15 ist an dem vom Angriffspunkt der Spannvorrichtung 16 abgekehrten Ende schwenkbeweglich gelagert (Schwenkpunkt 22), so dass unter der Kraft der Druckfeder 19 der Spannkolben 18 den Gleitschuh 15 soweit verschwenkt, bis der Kettenbereich zwischen dem Antriebszahnrad 13 der Kurbelwelle 10 und dem Stirnrad 12 straff gespannt ist. Der Spannkolben 18 begrenzt mit seinem vom Ausschubende abgekehrten Stirnende im Gehäuse 17 eine Druckkammer 23, die über das Rückschlagventil 20 mit dem Hydraulikanschluss 21 in Verbindung steht, wobei die Sperrrichtung des Rückschlagventils 20 zum Hydraulikanschluss 21 weist. Zur Aufnahme der Druckfeder 19 ist der Spannkolben 18 hohlzylindrisch mit geschlossenem Zylinderende ausgebildet. In den dadurch vorhandenen Hohlraum im Spannkolben 18 ist die Druckfeder 19 so eingesetzt, dass sie sich einerseits an dem vom Spannkolben 18 abgekehrten Grund der Druckkammer 23 und andererseits an dem geschlossenen Zylinderende des Spannkolbens 18 abstützt. Um das Volumen des Hohlraums im Spannkolben 18 und damit das Volumen der Druckkammer 23 klein zu halten, ist im Hohlraum des Spannkolbens 14 ein zylindrischer Füllkörper 24 angeordnet, der zugleich zur Führung der Druckfeder 19 dient. Der Füllkörper 24 trägt endseitig eine radial überstehende Kappe 241, an der sich die Druckfeder 19 abstützt und den Füllkörper 24 mit seiner Kappe 241 kraftschlüssig am Grund des Hohlraums im Spannkolben 18 festlegt.

Über das Rückschlagventil 20 ist die Druckkammer 23 mit unter Versorgungsdruck stehendem Fluid füllbar und über eine Leckstelle 25 entlastbar. Die Leckstelle 25 ist konstruktiv so ausgebildet, dass der über die Leckstelle 25 abfließende Fluidvolumenstrom selbstregelnd variiert, wobei sich die Leckrate abhängig von der Verschiebeposition des Spannkolbens 18 ändert. Die Ausbildung der Leckstelle 25 ist dabei so vorgenommen, dass die Leckrate sich vergrößert, je weiter der Spannkolben 18 aus dem Gehäuse 17 austritt, also sich das Kammervolumen der Druckkammer 23 vergrößert. Umgekehrt verkleinert sich die Leckrate, je weiter der Spannkolben 18 in das Gehäuse 17 hineingeschoben wird, also sich das Kammervolumen der Druckkammer 23 reduziert. Die Änderung der Leckrate kann dabei in Stufen oder stetig erfolgen. Die Ausbildung der Leckstelle 25 ist dabei in Zuordnung zur Verschiebeposition des Spannkolbens 18 so getroffen, dass der im Resonanzbereich des Kettentriebs maximal aus dem Gehäuse 17 auswandernde Spannkolben 18 eine Verschiebeposition einnimmt, in der die Leckstelle 25 den größten Öffnungsquerschnitt aufweist und damit eine sehr große Leckrate aus der Druckkammer 23 abfließt. Dieses starke Auswandern des Spannkolbens 18 im Resonanzbereich des Kettentriebs kommt dadurch zustande, dass durch die verstärkte Kettenschwingung im Resonanzbereich der Spannkolben 18 seinerseits stark zu Schwingungen angeregt wird, wodurch über den breiten Querschnitt des Rückschlagventils 20 mehr Fluid nachgesaugt wird, als über die mit kleiner Leckrate eingestellte Leckstelle 25 abfließt. Dadurch pumpt sich die Druckkammer 23 auf, und der Spannkolben 18 wird stärker ausgeschoben, wodurch wiederum die Endloskette 14 stärker gespannt und die Zugbelastung der Endloskette 14 sowie die Reibung des Kettentriebs ansteigt. Durch die beim Ausfahren des Spannkolbens 18 sich nunmehr einstellende größere Leckrate der Leckstelle 25 wird die hohe Spannkraft im Resonanzbereich des Kettentriebs reduziert, wobei durch optimale Ausbildung der Leckstelle 25 die Spannkraft sich gegenüber der Spannkraft in Drehzahlbereichen des Kettentriebs, die außerhalb des Resonanzbereichs liegen, nur wenig ändert.

Die Geometrie der Leckstelle 25 mit durch den Spannkolben 18 steuerbarer Leckrate kann sowohl im Gehäuse 17, als auch im Spannkolben 18 selbst sowie auch teilweise im Gehäuse 17 und teilweise im Spannkolben 18 ausgebildet werden, wie dies in Fig. 2 bis 11 illustriert ist. Fig. 2 bis 11 zeigen jeweils die Spannvorrichtung 16 mit unterschiedlich ausgebildeten Leckstellen 25 im Längsschnitt. Der dem jeweiligen Längsschnitt zugeordnete vereinfachte Querschnitt (Linie A-A) zeigt Gehäuse 17 und Spannkolben 18 unter Weglassen von Füllkörper 24 und Druckfeder 19.

Bei den in Fig. 2 bis 6 dargestellten Ausführungsbeispielen der Spannvorrichtung 16 ist die Geometrie der Leckstelle 25 im Gehäuse 17 untergebracht.

Im Ausführungsbeispiel der Fig. 2 besteht die Leckstelle 25 aus mehreren, voneinander beabstandet im Gehäuse 17 in Axialrichtung aneinandergereihten Fluid-Abflusslöchern 26, die jeweils die Gehäusewand vollständig durchdringen. Die Abflusslöcher 26 sind abhängig von der Verschiebeposition des Spannkolbens 18 vom Mantel des Spannkolbens 18 verschließbar oder freigegebbar, wobei die der Druckkammer 23 zugekehrte Stirnkante des Spannkolbens 18 eine Steuerkante bildet. In der in Fig. 2 dargestellten Verschiebeposition des Spannkolbens 18, in welcher letzterer mit optimaler Spannkraft die Endloskette 14 spannt, ist lediglich das eine der Abflusslöcher 26 geöffnet. Der Öffnungsquerschnitt der Leckstelle 25 ist minimal, und das Einschieben des Spannkolbens 18 durch die Endloskette 14 in das Gehäuse 17 ist stark gedämpft. Ist der Spannkolben 18 dagegen soweit verschoben, dass alle Abflusslöcher 26 vom Spannkolben 18 freigegeben sind, so weist die Leckstelle 25 ihren maximalen Öffnungsquerschnitt auf, und die Dämpfung des Spannkolbens 18 bei dessen Einschieben durch die Endloskette 14 in das Gehäuse 17 hinein, ist geringer.

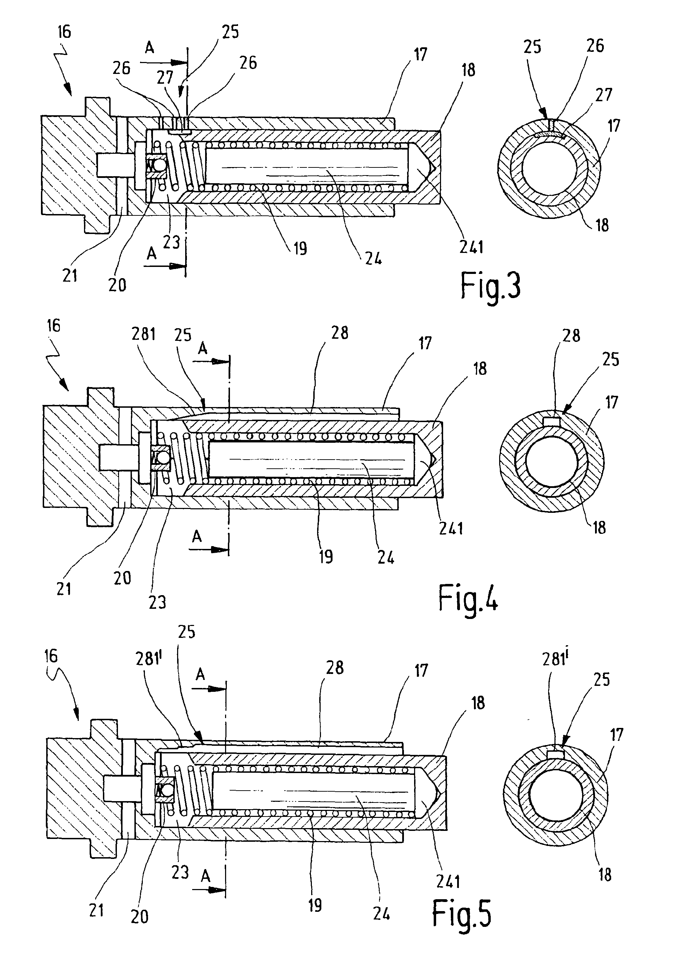

Das in Fig. 3 dargestellte Ausführungsbeispiel der Spannvorrichtung 16 unterscheidet sich von dem in Fig. 2 dargestellten nur dadurch, dass die Fluid-Abflusslöcher 26 der Leckstelle 25 nicht durch den Mantel des Spannkolbens 18 sukzessive verschlossen und freigegeben werden, sondern am Spannkolben 18 eine gesonderte Abdeckblende 27 angeordnet ist, die die Steuerungsfunktion der Abflusslöcher 26 übernimmt.

Im Ausführungsbeispiel der Spannvorrichtung 16 gemäß Fig. 4 ist die Leckstelle 25 von einer im Gehäuse 17 angeordneten, zum Spannkolben 18 hin offene Axialnut 28 gebildet. Die Axialnut 28 läuft an dem Kolbenaustrittsende des Gehäuses 17 frei aus, während sie in einem davon abgekehrten, dem Grund der Druckkammer 23 zugekehrten Endbereich einen Nutabschnitt 281 aufweist, in dem die Nuttiefe hin zum Grund der Druckkammer 23 stetig abnimmt. Je stärker der Spannkolben 18 aus dem Gehäuse 17 auswandert, desto größer wird der in der Druckkammer 23 mündende Nutquerschnitt und desto größer der Öffnungsquerschnitt der Leckstelle 25, wodurch die Leckrate ansteigt und die Dämpfung des Spannkolbens 18 beim Einfedern in das Gehäuse 17 abnimmt.

Das Ausführungsbeispiel der Spannvorrichtung 16 in Fig. 5 unterscheidet sich von dem in Fig. 4 nur dadurch, dass im endseitigen Nutabschnitt 281 die Nuttiefe nicht stetig, sondern in Achsrichtung gestuft abnimmt, so dass die Leckrate beim Auswandern des Spannkolbens 18 aus dem Gehäuse 17 je nach Verschiebeposition des Spannkolbens 18 in diskreten Stufen anwächst.

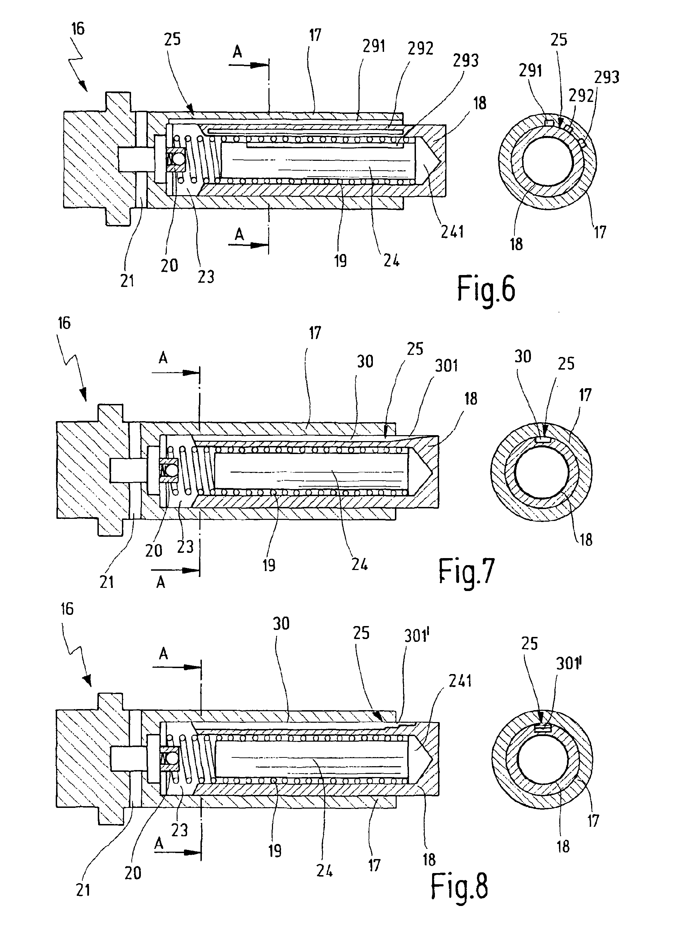

Beim Ausführungsbeispiel der Spannvorrichtung 16 gemäß Fig. 6 wird die Leckstelle 25 von mehreren, im Gehäuse 17 angeordneten und zum Spannkolben 18 hin offenen Axialnuten 291, 292 und 293 gebildet, die in Umfangsrichtung gegeneinander versetzt sind und am Kolbenaustrittsende des Gehäuses 17 frei auslaufen. Die erste Axialnut 291 erstreckt sich bis zu oder nahe dem vom Gehäuse 17 begrenzten Grund der Druckkammer 23, während die in Umfangsrichtung folgenden Axialnuten 292 und 293 zunehmend abgestufte Axiallängen aufweisen. Je nach Verschiebeposition des Spannkolbens 18 wird die Nut 291 oder werden die beiden Nuten 291 und 292 oder werden alle drei Nuten 291, 292 und 293 mit der Druckkammer 23 verbunden, so dass der Öffnungsquerschnitt der Leckstelle 25 und damit die Leckrate in Stufen zunimmt.

Bei den in Fig. 7, 8 und 9 skizzierten Ausführungsbeispielen der Spannvorrichtung 16 ist die Geometrie der Leckstelle 25 im Spannkolben 18 ausgebildet.

In dem Ausführungsbeispiel der Spannvorrichtung 16 gemäß Fig. 7 ist die Leckstelle 25 von einer im Mantel des Spannkolbens 18 angeordneten, zum Gehäuse 17 hin offene Axialnut 30 gebildet, die sich über die gesamte Axiallänge des Spannkolbens 18 erstreckt. In dem von der Druckkammer 23 abgekehrten Endbereich des Spannkolbens 18 ist ein Nutabschnitt 301 vorhanden, dessen Nuttiefe stetig zum Ende des Spannkolbens 18 hin abnimmt.

Im Ausführungsbeispiel der Spannvorrichtung 16 in Fig. 8 ist die Nuttiefe in diesem Nutabschnitt 301' nicht stetig, sondern in Achsrichtung stufig reduziert. In beiden Fällen vergrößert sich die über die Leckstelle 25 abfließende Leckrate mit zunehmendem Ausschieben des Spannkolbens 18 aus dem Gehäuse 17.

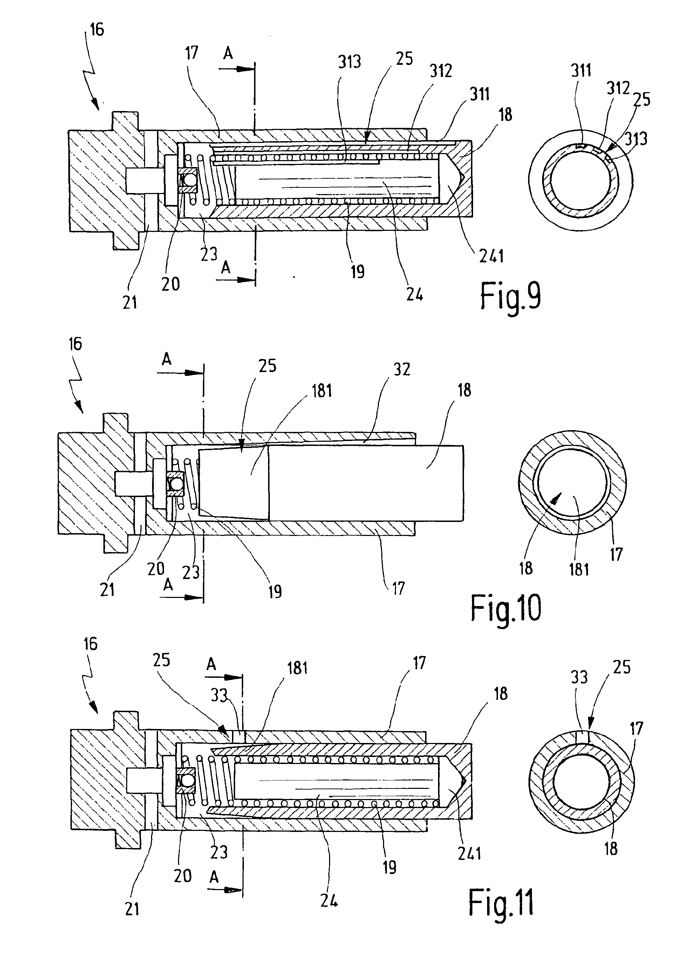

Im Ausführungsbeispiel der Spannvorrichtung 16 gemäß Fig. 9 ist die Leckstelle 25 von mehreren, im Mantel des Spannkolbens 18 angeordneten und zum Gehäuse 17 hin offenen Axialnuten 311, 312, 313 gebildet. Die Axialnuten 311, 312, 313 sind in Umfangsrichtung gegeneinander versetzt und laufen in der Druckkammer 23 frei aus. Die erste Axialnut 311 erstreckt sich nahezu über die gesamte Axiallänge des Spannkobens 18 und mündet in jeder Verschiebeposition des Spannkolbens 18 außerhalb des Gehäuses 17. Die in Umfangsrichtung folgenden Axialnuten 312, 313 weisen Axiallängen auf, die gegenüber der Axialnut 311 und von der Axialnut 312 zur Axialnut 313 reduziert sind. Beide Axialnuten 312 und 313 werden erst nach einem bestimmten Ausschiebeweg des Spannkolbens 18 aus dem Gehäuse 17 von der Innenwand des Gehäuses 17 freigegeben.

Bei den Ausführungsbeispielen der Spannvorrichtung 16 gemäß Fig. 10 und 11 sind die Leckstellen 25 durch teilweise Ausbildung der Geometrie im Gehäuse 17 und im Spannkolben 18 realisiert. In beiden Fällen weist der Spannkolben 18, der in Fig. 10 in Stirnansicht zu sehen ist, an seinem der Druckkammer 23 zugekehrten Ende einen zur Druckkammer 23 hin sich verjüngenden, konusförmigen Kolbenabschnitt 181 auf. Im Ausführungsbeispiel der Fig. 10 ist in die Innenwand des Gehäuses 17 eine zum Spannkolben 18 hin offene Axialnut 32 eingearbeitet, die am Kolbenaustrittsende des Gehäuses 17 frei ausläuft und sich mit stetig abnehmender Nuttiefe vom Kolbenaustrittsende des Gehäuses 17 bis in die Druckkammer 23 erstreckt. Im Ausführungsbeispiel der Fig. 11 ist im Gehäuse 17 eine Fluid-Abflussöffnung 33 angeordnet, die vom konusförmigen Kolbenabschnitt 181 abhängig von der Verschiebeposition des Spannkolbens 18 freiggebbar oder verschließbar ist. Die in den Spannvorrichtungen 16 gemäß Fig. 10 und 11 ausgeführten Leckstellen 25 wirken in gleicher Weise wie die zu den übrigen Ausführungsbeispielen beschriebenen Leckstellen 25.

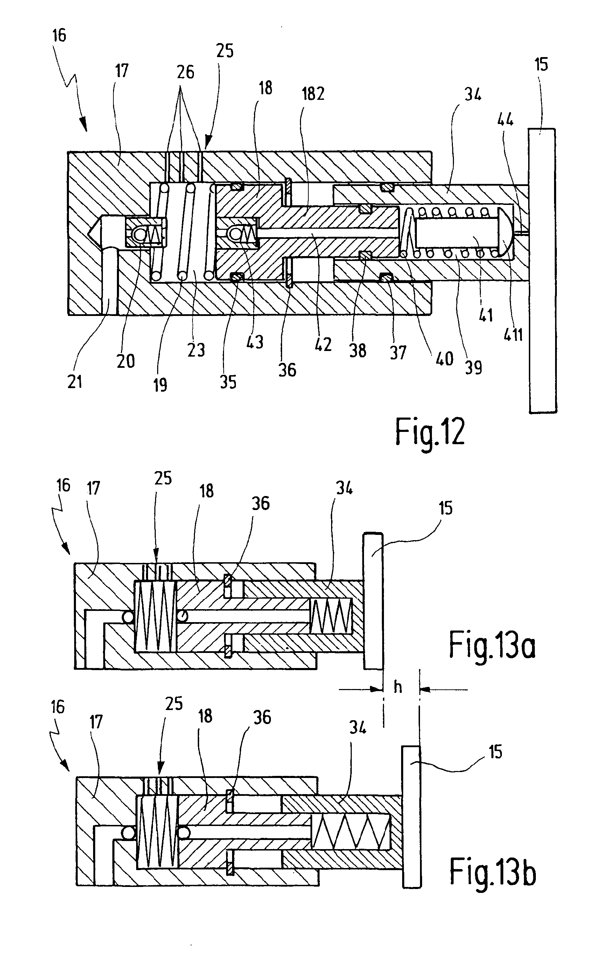

In Fig. 12 ist ein weiteres Ausführungsbeispiel einer Spannvorrichtung 16 im Längsschnitt dargestellt, die anstelle der Spannvorrichtung 16 gemäß Fig. 2 bis 11 im Kettentrieb der Brennkraftmaschine gemäß Fig. 1 eingesetzt werden kann. Diese Spannvorrichtung 16 unterscheidet sich von den zuvor beschriebenen Spannvorrichtungen 16 dadurch, dass im Spannkraft-Übertragungspfad zwischen dem Spannkolben 18 und der Endloskette 14 bzw. dem die Endloskette 14 aufnehmenden Gleitschuh 15 ein Längenausgleichskolben 34 angeordnet ist, der Längungen der Endloskette 14, wie sie beispielsweise zwischen der neuen Endloskette 14 und der im längeren Betrieb gealterten Endloskette 14 auftreten, kompensiert. Durch den zusätzlichen Längenausgleichskolben 34 werden auch die Funktionen der Spannvorrichtung, nämlich Spannen der Endloskette 14 und Längenausgleich einerseits und Dämpfen der Kettenschwingungen andererseits, voneinander getrennt und damit besser optimierbar. Der nach wie vor im Gehäuse 17 axial verschieblich geführte Spannkolben 18 begrenzt im Gehäuse 17 wiederum die Druckkammer 23, die über das Rückschlagventil 20 mit dem Hydraulikanschluss 21 in Verbindung steht. Die den Spannkolben 18 belastende Druckfeder 19 ist in der Druckkammer 23 angeordnet und stützt sich einerseits an dem vom Gehäuse 17 gebildeten Grund der Druckkammer 23 und andererseits an der die Druckkammer 23 begrenzenden Stirnfläche des Spannkolbens 18 ab. Der Spannkolben 18 ist mittels z.B. einer Ringdichtung 35 gegenüber der Innenwand des Gehäuses 17 abgedichtet und durch die Druckkraft der Druckfeder 19 gegen einen im Gehäuse 17 festgelegten Anschlag 36, der beispielsweise als in eine Ringnut des Gehäuses 17 eingelegter Sicherungsring ausgebildet ist, angelegt. Der Anschlag 36 begrenzt den maximalen Verschiebeweg des Spannkolbens 18.

Der becherförmige Längenausgleichskolben 34 ist einerseits - wie der Spannkolben 18 - im Gehäuse 17 und andererseits auf einem im Durchmesser reduzierten Kolbenabschnitt 182 des Spannkolbens 18 geführt und ragt am offenen Ende des Gehäuses 17 aus dem Gehäuse 17 heraus, um kraftschlüssig an dem Gleitschuh 15 des Kettentriebs nach Fig. 1 anzuliegen. Der Längenausgleichskolben 34, der mittels z.B. zweier Ringdichtungen 37, 38 einerseits gegenüber dem Gehäuse 17 und andererseits gegenüber dem Kolbenabschnitt 182 abgedichtet ist, schließt zusammen mit dem Kolbenabschnitt 182 eine zweite Druckkammer 39 ein. In der zweiten Druckkammer 39 ist eine den Längenausgleichskolben 34 in Ausschieberichtung belastende Druckfeder 40 angeordnet, die auf einem in der zweiten Druckkammer 39 einliegenden zweiten Füllkörper 41 aufgenommen ist, sich einerseits an der Stirnseite des Kolbenabschnitts 182 und andererseits an einer radial überstehenden Kappe 411 des Füllkörpers 41 abstützt und somit den Füllkörper 41 gegen den Becherboden des Längenausgleichskolbens 34 drückt. Die zweite Druckkammer 39 ist über eine Axialbohrung 42, die den gesamten Spannkolben 18 durchzieht, mit der ersten Druckkammer 23 verbunden. In einem im Innendurchmesser vergrößerten Kanalabschnitt des Axialkanals 42 ist ein zweites Rückschlagventil 43 mit zur ersten Druckkammer 23 weisender Sperrrichtung angeordnet. Wie bei der Spannvorrichtung 16 gemäß Fig. 2 bis 11 mündet in der ersten Druckkammer 23 eine Leckstelle 25 mit abhängig von der Verschiebeposition des Spannkolbens 18 gesteuerter Leckrate. Im Ausführungsbeispiel der Fig. 12 ist die Leckstelle 25 wie bei der Spannvorrichtung 16 in Fig. 2 ausgebildet. Sie kann aber auch wie die Leckstellen 25 in den Spannvorrichtungen 16 gemäß Fig. 3 bis 11 ausgeführt werden.

Bei der zweiteiligen Spannvorrichtung 16 gemäß Fig. 12 ist das Flächenverhältnis der vom Spannkolben 18 und dem Gehäuse 17 begrenzten ersten Druckkammer 23 und der vom Längenausgleichskolben 34 und Spannkolben 18 begrenzten zweiten Druckkammer 39 unter Berücksichtigung der Auslegung der Druckfedern 19 und 40 an den konstruktiven Gegebenheiten des Kettentriebs anzupassen. Es kann daher erforderlich sein, die die zweite Druckkammer 39 begrenzende Kolbenfläche des Spannkolbens 18 größer zu bemessen als die die erste Druckkammer 23 begrenzende Kolbenfläche des Spannkolbens 18. In diesem Fall ist der Längenausgleichskolben 34 nicht mehr zusätzlich im Gehäuse 17 geführt, sondern außerhalb des Gehäuses 17 ausschließlich auf dem durchmessergrößeren Kolbenabschnitt des Spannkolbens 18. Für eine zuverlässige Führung ist dieser Kolbenabschnitt des Spannkolbens 18 langgestreckt ausgeführt und mit einer topfförmigen Ausnehmung versehen, die von seiner der Druckkammer 39 zugekehrten Stirnseite her eingebracht ist.

Die Arbeitsweise der Spannvorrichtung 16 gemäß Fig. 12 ist in den Fig. 13, 14 und 15 illustriert. Dabei ist in Fig. 13 die mit geringer Dämpfung arbeitende Spannvorrichtung 16 in der Verschiebeposition des Längenausgleichskolbens bei neuer Endloskette 14 (Fig. 13a) und bei alterungsbedingt gelängter Endloskette 14 (Fig. 13b) dargestellt. In beiden Figuren ist mit 15 der Gleitschuh oder die Führungsschiene, wie sie in Fig. 1 dargestellt ist, gekennzeichnet. Durch die Federkraft der ersten Druckfeder 19 ist der Spannkolben 18 gegen den Anschlag 36 gedrückt und durch die zweite Druckfeder 40 der Längenausgleichskolben 34 kraftschlüssig an den Gleitschuh 15, die Endloskette 14 spannend, angelegt. Bei einer neuen Kette 14 wird dabei der Längenausgleichkolben 34 in einem kleineren Umfang aus dem Gehäuse 17 ausgefahren (Fig. 13a) als bei einer im längeren Betrieb gelängten Endloskette 14 (Fig. 13b). Durch den unterschiedlichen Hub h des Längenausgleichskolbens 34 wird jegliche Längenänderung ausgeglichen und die Endloskette 14 straff gespannt gehalten.

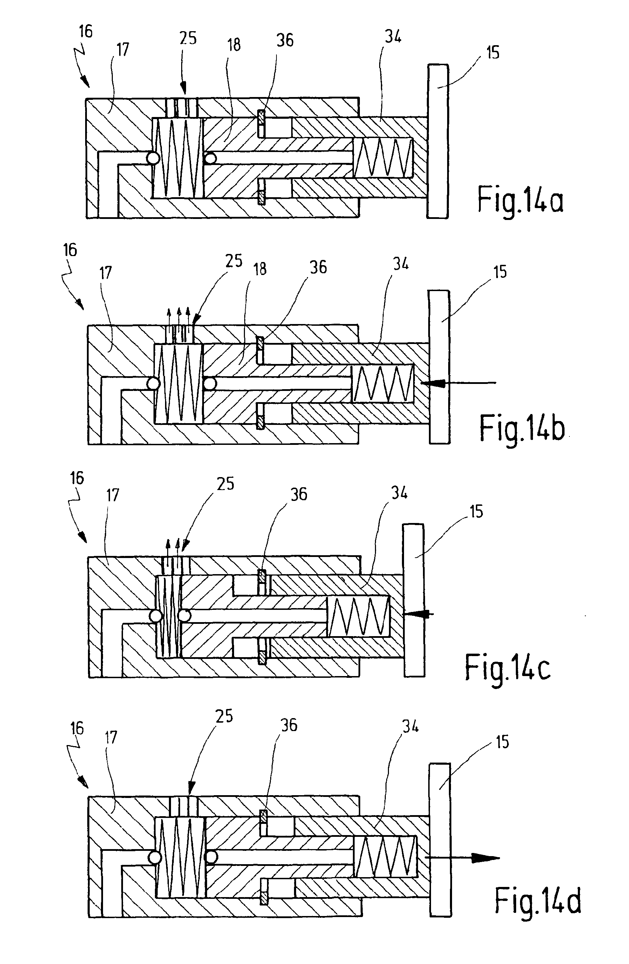

In Fig. 14 ist die Funktion der Dämpfung der Kettenschwingungen durch die Spannvorrichtung 16 bei niedriger Dämpfung des Spannkolbens 18 illustriert, wobei der mittlere Hub des Spannkolbens 18 weiter zum Übertragungsmittel 15 hin verlagert ist. Dabei zeigen Fig. 14a den unbelasteten Ausgangszustand der Spannvorrichtung 16, Fig. 14b das Einfedern der Spannvorrichtung mit größerem Hub infolge der von der Endloskette 14 aufgebrachten Kraft, Fig. 14c die hubabhängige Dämpfung und Fig. 14d das Ausfedern der Spannvorrichtung 16 mit Kraftwirkung auf die Endloskette 14.

Im Ausgangszustand (Fig. 14a) sind die beiden Druckkammern 23, 39 mit Fluid gefüllt. Dabei ist der Spannkolben 18 bis zum Anschlag 26 ausgewandert, und der Längenausgleichkolben 34 überbrückt den Resthub bis zum Gleitschuh 15. Beim Füllen der zweiten Druckkammer 39 wird die Druckkammer 39 über die im Becherboden vorgesehene Entlüftungsöffnung 44 entlüftet. Beginnt die Endloskette 14 zu schwingen, drückt sie auf den Längenausgleichkolben 34 (Fig. 14b). Der Längenausgleichskolben 34 ist aber durch das in der Druckkammer 39 hermetisch eingeschlossene Fluid "steif" und überträgt die Kraft über das inkompressible Fluidpolster auf den Spannkolben 18. Dieser wird nunmehr in Richtung zum Grund der ersten Druckkammer 23 hin verschoben, wobei er Fluid aus der ersten Druckkammer 23 über die von den drei Fluid-Abflusslöchern 26 gebildete Leckstelle 25 ausschiebt. Je nach Größe des Verschiebewegs des Spannkolbens 18 wird ein größerer oder kleinerer Öffnungsquerschnitt der Leckstelle 25 freigegeben und damit der Spannkolben 18 hubabhängig gedämpft (Fig. 14c). Beim Zurückfedern drückt die erste Druckfeder 19 den Spannkolben 18 in Richtung Endloskette 14 zurück, wobei die Verschiebebewegung des Spannkolbens 18 über den durch die hermetisch geschlossene zweite Druckkammer 39 starr an den Spannkolben 18 angekoppelten Längenausgleichskolben 34 zum Spannen der Kette 14 führt (Fig. 14d). Beim Ausschieben des Spannkolbens 18 wird von diesem über das sich öffnende erste Rückschlagventil 20 Fluid bzw. Öl in die erste Druckkammer 23 angesaugt.

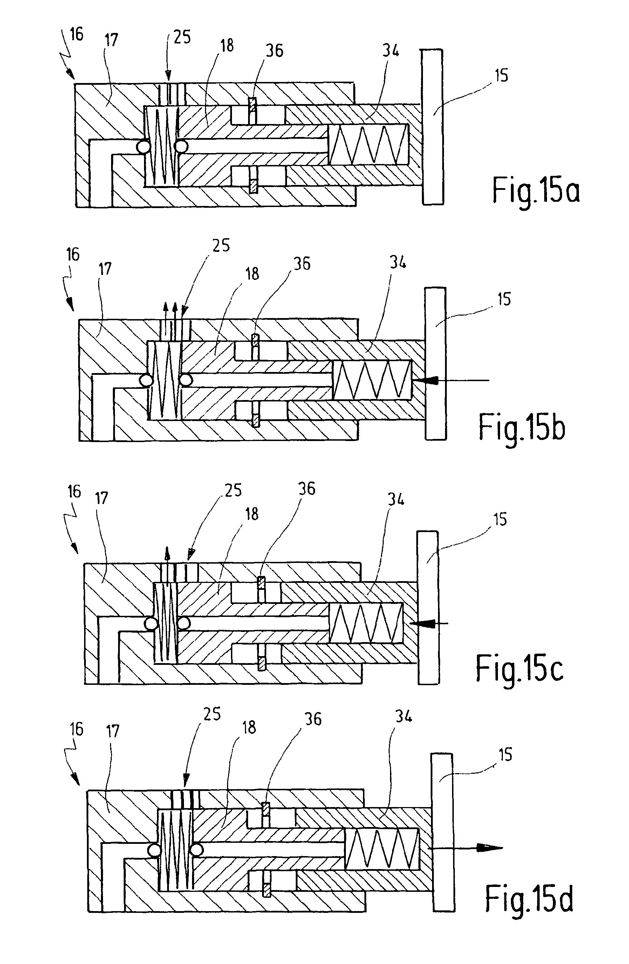

In Fig. 15 ist der gleiche Vorgang der Dämpfung der Kettenschwingung bei höherer Dämpfung des Spannkolbens 18 dargestellt, wobei der mittlere Hub des Spannkolbens 18 weiter zur Druckkammer 23 hin verlagert ist. Im unbelasteten Ausgangszustand der Spannvorrichtung 16 (Fig. 15a) ist der Spannkolben 18 nicht bis zu seinem Anschlag 36 verschoben, da das Spannen der Endloskette 14 bereits bei einem kleineren Verschiebeweg der Kolbenkombination aus Spannkolben 18 und Längenausgleichskolben 34 erfolgt. Durch den geringeren Verschiebeweg des Spannkolbens 18 sind von den drei Fluid-Abflusslöchern 26 der Leckstelle 25 nur zwei Abflusslöcher 26 mit der Druckkammer 23 verbunden, während das dritte Abflussloch 26 durch den Spannkolben 18 verschlossen ist. Mit dem reduzierten Öffnungsquerschnitt der Leckstellen 25 ist auch die aus der Druckkammer 23 beim Einfedern der Spannvorrichtung (Fig. 15b) durch den Spannkolben 18 ausgeschobene Leckrate kleiner, so dass die auf den Spannkolben 18 und auf den wiederum mit dem Spannkolben 18 über das inkompressible Fluidvolumen in der zweiten Druckkammer 39 starr gekoppelte Längenausgleichskolben 34 wirkende Dämpfung größer ist. In Fig. 15c ist wiederum die hubabhängige Dämpfung der Spannvorrichtung illustriert. Beim Ausfedern der Spannvorrichtung 16 (Fig. 15d), was wiederum durch die erste Druckfeder 19 bewirkt wird, wird die Spannkraft wiederum auf den Gleitschuh 15 und damit auf die Endloskette 14 übertragen und der Kettenbereich zwischen Antriebszahnrad 13 und Stirnrad 12 (Fig. 1) straff gehalten.

## Patentansprüche

1. Spannvorrichtung zum Spannen eines endlosen Überträgungsmittels, wie Kette oder Riemen, insbesondere einer Endloskette (14) eines Kettentriebs einer Brennkraftmaschine zum Antreiben mindestens einer Nockenwelle durch eine Kurbelwelle (10), mit einem auf das Übertragungsmittel einwirkenden, zum Übertragungsmittel hin federbelasteten Spannkolben (18), mit einer vom Spannkolben (18) begrenzten Druckkammer (23), die über ein Rückschlagventil (20) mit einem unter Versorgungsdruck stehenden Fluid füllbar und über eine Leckstelle (25) mit steuerbare Leckrate entlastbar ist, wobei die Leckstelle (25) konstruktiv so ausgebildet ist, dass ihre Leckrate sich abhängig von der Verschiebeposition des Spannkolbens (18) ändert, und wobei die Änderung der Leckrate so vorgenommen ist, dass die Leckrate sich vergrößert, je weiter sich der Spannkolben in Richtung Spannen des Übertragungsmittels verschiebt und die Leckrate sich verkleinert, je weiter sich der Spannkolben (18) in Gegenrichtung verschiebt, **dadurch gekennzeichnet, dass** die Ausbildung der Leckstelle (25) in Zuordnung zur Verschiebeposition des Spannkolbens (18) so getroffen ist, dass der Spannkolben (18) im Bereich der Resonanzstelle des Übertragungsmittels eine große Leckrate zulassende Verschiebeposition einnimmt, in der die Leckstelle (25) den größten Öffnungsquerschnitt aufweist.

2. Spannvorrichtung nach Anspruch 1, **dadurch gekennzeichnet, dass** die Änderung der Leckrate in Stufen öder stetig erfolgt.

3. Spannvorrichtung nach einem der Ansprüche 1 bis 2, **dadurch gekennzeichnet, dass** der Spannkolben (18) in einem Gehäuse (17) verschiebbar angeordnet ist, das an seinem dem Übertragungsmittel zugekehrten Ende zum Aüsschieben des Spannkolbens (18) offen ist, und dass die Leckstelle (25) im Gehäuse (17) und/oder am Spannkolben (18) ausgebildet ist.

4. Spannvorrichtung nach Anspruch 3, **dadurch gekennzeichnet, dass** die Leckstelle (25) mehrere im Gehäuse (17) axial beabstandet aneinandergereihte Fluid-Abflüsslöcher (26) aufweist, die von dem Mantel des Spannkolbens (18) oder einer am Spannkolben (18) angeordneten Abdeckblende (27) abhängig von der Verschiebestellung des Spannkolbens (18) sukzessive freigebbar oder verschließbar sind.

5. Spannvorrichtung nach Anspruch 3, **dadurch gekennzeichnet, dass** die Leckstelle (25) von einem in die Druckkammer (23) hineinragenden, konusförmigen Kolbenabschnitt (181) des Spannkolbens (18) und einer im Gehäuse (17) im Bereich des Verschiebewegs des konusförmigen Kolbenabschnitts (181) angeordnete Fluid-Abflussöffnung (33) gebildet ist.

6. Spannvorrichtung nach Anspruch 3, **dadurch gekennzeichnet, dass** die Leckstelle (25) von einer im Gehäuse (17) angeordneten, zum Spannkolben (18) hin offenen Axialnut (30) gebildet ist, die an dem Kolbenaustrittsende des Gehäuses (17) frei ausläuft und in einem endseitigen, dem vom Gehäuse (17) begrenzten Grund der Druckkammer (23) zugekehrten Nutabschnitt (281; 281') eine zum Grund der Druckkammer (23) hin stetig oder stufig abnehmbare Nuttiefe aufweist.

7. Spannvorrichtung nach Anspruch 3, **dadurch gekennzeichnet, dass** die Leckstelle (25) von mehreren, im Gehäuse (17) angeordneten und zum Spannkolben (18) hin offene Axialnuten (291, 292, 293) gebildet ist, die in Umfangsrichtung gegeneinander versetzt sind und am Kolbenaustrittsende des Gehäuses (17) frei auslaufen, und dass die eine Axialnut (291) sich bis nahe dem vom Gehäuse (17) begrenzten Grund der Druckkammer (23) erstreckt und die Axiallängen der weiteren Axialnuten.(292, 293) in Stufen reduziert sind.

8. Spannvorrichtung nach Anspruch 3, **dadurch gekennzeichnet, dass** die Leckstelle (25) von einer im Mantel des Spannkolbens (18) angeordneten, zum Gehäuse (17) hin offenen Axialnut (30) gebildet ist, die sich über die gesamte Axiallänge des Spannkolbens (18) erstreckt und deren Nuttiefe in dem von der Druckkammer (23) abgekehrten Endbereich des Spannkolbens (18) stetig oder stufenförmig abnimmt.

9. Spannvorrichtung nach Anspruch 3, **dadurch gekennzeichnet, dass** die Leckstelle (25) von mehreren, im Mantel des Spannkolbens (18) angeordneten, zum Gehäuse (17) hin offenen Axialnuten (311, 312, 313) gebildet ist, die in Umfangrichtung gegeneinander versetzt sind und in der Druckkammer (23) frei auslaufen, und dass die eine Axialnut (311) sich nahezu über die gesamte Axiallänge des Spannkolbens (18) erstreckt und die Axiallängen der anderen Axialnuten (312, 313) in Stufen reduziert sind.

10. Spannvorrichtung nach Anspruch 3, **dadurch gekennzeichnet, dass** die Leckstelle (75) von einer im Gehäuse (17) angeordneten, zum Spannkolben (18) hin offenen Axialnut (32), die am Kolbenaustrittsende des Gehäuses (17) frei ausläuft und sich mit stetig abnehmender Nuttiefe vom Kolbenaustrittsende des Gehäuses (17) bis in die Druckkammer (23) erstreckt, und einem am Spannkolben (18) ausgebildeten, konusförmigen Kolbenabschnitt (181) gebildet ist, der in die Druckkammer (23) hineinragt.

11. Spannvorrichtung nach einem der Ansprüche 1 bis 10, **dadurch gekennzeichnet, dass** im Spannkraft-Übertragungspfad zwischen Spannkolben (18) und Übertragungsmittel ein Längungen des Übertragungsmittels ausgleichender Längenausgleichskolben (34) angeordnet ist.

12. Spannvorrichtung nach Anspruch 11, **dadurch gekennzeichnet, dass** der Längenausgleichskolben (34) in Richtung zum Übertragungsmittel hin federbelastet ist und zusammen mit dem Spannkolben (18) eine zweite Druckkammer (39) einschließt, dass die zweite Druckkammer (39) über ein zweites Rückschlagventil (43) mit dem unter Versorgungsdruck stehenden Fluid füllbar ist, und dass im Verschiebeweg des Spannkolbens (18) ein Anschlag (36) angeordnet ist, der den Spannkolben (18) in einer die maximale Leckrate zulassenden Verschiebeposition blockiert.

13. Spannvorrichtung nach Anspruch 11 oder 12, **dadurch gekennzeichnet, dass** der Längenausgleichskolben (34) auf einem Kolbenabschnitt (182) des Spannkolbens (18) axial verschieblich geführt ist und gegenüber diesem Kolbenabschnitt (182) abgedichtet ist.

14. Spannvorrichtung nach Anspruch 13, **dadurch gekennzeichnet, dass** der Längenausgleichskolben (34) zusätzlich axial verschiebbar im Gehäuse (17), aus diesem am offenen Gehäuseende austretend, geführt ist und dass der Längenausgleichskolben (34) und der Spannkolben (18) gegenüber der Gehäusewand des Gehäuses (17) abgedichtet sind.

15. Spannvorrichtung nach einem der Ansprüche 12 bis 14, **dadurch gekennzeichnet, dass** eine im Innern des Längenausgleichskolbens (34) aufgenommene zweite Druckfeder (40) sich einerseits am Spannkolben (18), vorzugsweise an der Stirnseite des im Durchmesser reduzierten Kolbenabschnitts (182) des Spannkolbens (18), und andererseits am Längenausgleichskolben (34) abstützt.

16. Spannvorrichtung nach einem der Ansprüche 12 bis 15, **dadurch gekennzeichnet, dass** das zweite Rückschlagventil (43) zwischen erster und zweiter Druckkammer (23, 39) angeordnet ist.

17. Spannvorrichtung nach Anspruch 16, **dadurch gekennzeichnet, dass** das zweite Rückschlagventil (43) im Spannkolben (18) integriert ist.

18. Spannvorrichtung nach Anspruch 17, **dadurch gekennzeichnet, dass** das zweite Rückschlagventil (42) in einem im Spannkolben (18) ausgebildeten Äxialkanal (42) angeordnet ist, der auf beiden Stirnseiten des Spannkolbens (18) frei ausläuft.

## Claims

1. Tension device for tensioning an endless transmission means, such as a chain or belt, in particular an endless chain (14) of a chain drive of an internal combustion engine for driving at least one camshaft by means of a crankshaft (10), with a tension piston (18) which acts on the transmission means and is spring-loaded towards the transmission means and which has a pressure chamber (23) which is delimited by the tension piston (18) which can be filled via a non-return valve (20) with fluid standing under a supply pressure and can be relieved via a leakage point (25) having a controllable leakage rate, the leakage point (25) being designed structurally such that its leakage rate changes as a function of the displacement position of the tension piston (18), and the change in the leakage rate being carried out such that the leakage rate increases, the further the tension piston is displaced in the direction of the tension of the transmission means, and the leakage rate is reduced, the further the tension piston (18) is displaced in the opposite direction, **characterized in that** the design of the leakage point (25) in assignment to the displacement position of the tension piston (18) is such that, in the region of the resonant point of the transmission means, the tension piston (18) assumes a displacement position which allows a high leakage rate and in which the leakage point (25) has the largest opening cross section.

2. Tension device according to Claim 1, **characterized in that** the change in the leakage rate takes place in steps or continuously.

3. Tension device according to either one of Claims 1 and 2, **characterized in that** the tension piston (18) is arranged displaceably in a housing (17) which at its end facing the transmission means is open for the expulsion of the tension piston (18), and **in that** the leakage point (25) is formed in the housing (17) and/or on the tension piston (18).

4. Tension device according to Claim 3, **characterized in that** the leakage point (25) has a plurality of fluid flow-out holes (26) which are lined up, spaced apart axially, in the housing (17) and which are successively openable or closable, as a function of the displacement position of the tension piston (18), by the casing of the tension piston (18) or a covering shutter (27) arranged on the tension piston (18).

5. Tension device according to Claim 3, **characterized in that** the leakage point (25) is formed by a conical piston portion (181), projecting into the pressure chamber (23), of the tension piston (18) and by a fluid flow-off orifice (33) arranged in the housing (17) in the region of the displacement travel of the conical piston portion (181).

6. Tension device according to Claim 3, **characterized in that** the leakage point (25) is formed by an axial groove (30) which is arranged in the housing (17) and is open towards the tension piston (18) and which runs out freely at the piston outlet end of the housing (17) and, in an end-face groove portion (281; 281') facing the bottom, delimited by the housing (17), of the pressure chamber (23), has a groove depth decreasable continuously or in steps towards the bottom of the pressure chamber (23).

7. Tension device according to Claim 3, **characterized in that** the leakage point (25) is formed by a plurality of axial grooves (291, 292, 293) which are arranged in the housing (17) and are open towards the tension piston (18) and which are offset with respect to one another in the circumferential direction and run out freely at the piston outlet end of the housing (17), and **in that** one axial groove (291) extends near to the bottom, delimited by the housing (17), of the pressure chamber (23), and the axial lengths of the further axial grooves (292, 293) are reduced in steps.

8. Tension device according to Claim 3, **characterized in that** the leakage point (25) is formed by an axial groove (30) which is arranged in the casing of the tension piston (18) and is open towards the housing (17) and which extends over the entire axial length of the tension piston (18) and the groove depth of which decreases continuously or in steps **in that** end region of the tension piston (18) which faces away from the pressure chamber (23).

9. Tension device according to Claim 3, **characterized in that** the leakage point (25) is formed by a plurality of axial grooves (311, 312, 313) which are arranged in the casing of the tension piston (18) and are open towards the housing (17) and which are offset with respect to one another in the circumferential direction and run out freely in the pressure chamber (23), and **in that** one axial groove (311) extends virtually over the entire axial length of the tension piston (18), and the axial lengths of the other axial grooves (312, 313) are reduced in steps.

10. Tension device according to Claim 3, **characterized in that** the leakage point (25) is formed by an axial groove (32) which is arranged in the housing (17) and is open towards the tension piston (18) and which runs out freely at the piston outlet end of the housing (17) and extends with a continuously decreasing groove depth from the piston outlet end of the housing (17) into the pressure chamber (23), and by a conical piston portion (181) which is formed on the tension piston (18) and which projects into the pressure chamber (23).

11. Tension device according to one of Claims 1 to 10, **characterized in that** a length-compensating piston (34) compensating elongations of the transmission means is arranged in the tension-force transmission path between the tension piston (18) and transmission means.

12. Tension device according to Claim 11, **characterized in that** the length-compensating piston (34) is spring-loaded in the direction of the transmission means and together with the tension piston (18) encloses a second pressure chamber (39), **in that** the second pressure chamber (39) can be filled via a second non-return valve (43) with fluid standing under a supply pressure, and **in that**, in the displacement path of the tension piston (18), a stop (36) is arranged which blocks the tension piston (18) in a displacement position allowing the maximum leakage rate.

13. Tension device according to Claim 11 or 12,
**characterized in that** the length-compensating piston (34) is guided axially displaceably on a piston portion (182) of the tension piston (18) and is sealed off with respect to this piston portion (182).

14. Tension device according to Claim 13, **characterized in that** the length-compensating piston (34) is additionally guided axially displaceably in the housing (17) so as to emerge from the latter at the open housing end, and **in that** the length-compensating piston (34) and the tension piston (18) are sealed off with respect to the housing wall of the housing (17).

15. Tension device according to one of Claims 12 to 14, **characterized in that** a second compression spring (40) received inside the length-compensating piston (34) is supported, on the one hand, on the tension piston (18), preferably on the end face of the piston portion (182) of reduced diameter of the tension piston (18), and, on the other hand, on the length-compensating piston (34).

16. Tension device according to one of Claims 12 to 15, **characterized in that** the second non-return valve (43) is arranged between the first and the second pressure chamber (23, 39).

17. Tension device according to Claim 16, **characterized in that** the second non-return valve (43) is integrated in the tension piston (18).

18. Tension device according to Claim 17, **characterized in that** the second non-return valve (43) is arranged in an axial duct (42) which is formed in the tension piston (18) and which runs out freely on both end faces of the tension piston (18).

## Revendications

1. Dispositif de serrage pour serrer un moyen de transfert sans fin, comme une chaîne ou une courroie, notamment une chaîne sans fin (14) d'un entraînement par chaîne d'un moteur à combustion interne pour l'entraînement d'au moins un arbre à came par un vilebrequin (10), avec un piston de serrage (18) agissant sur le moyen de transmission, sollicité par ressort vers le moyen de transmission, avec une chambre de pression (23) limitée par le piston de serrage (18), laquelle peut être remplie par le biais d'une soupape de non retour (20) avec un fluide sous pression d'alimentation et peut être déchargée par le biais d'un point de fuite (25) avec un taux de fuite commandable, le point de fuite (25) étant réalisé d'un point de vue de la construction de telle sorte que son taux de fuite varie en fonction de la position de déplacement du piston de serrage (18), et la variation du taux de fuite étant effectuée de telle sorte que le taux de fuite augmente plus le piston de serrage se déplace dans la direction du serrage du moyen de transfert et que le taux de fuite diminue plus le piston de serrage (18) se déplace dans la direction opposée, **caractérisé en ce que** la réalisation du point de fuite (25) est effectuée en association avec la position de déplacement du piston de serrage (18) de telle sorte que le piston de serrage (18), dans la région du point de résonnance du moyen de transfert, adopte une position de déplacement autorisant un plus grand taux de fuite, dans laquelle le point de fuite (25) présente la plus grande section transversale d'ouverture.

2. Dispositif de serrage selon la revendication 1, **caractérisé en ce que** la variation du taux de fuite s'effectue par échelons ou en continu.

3. Dispositif de serrage selon l'une quelconque des revendications 1 à 2, **caractérisé en ce que** le piston de serrage (18) est disposé de manière déplaçable dans un boîtier (17), qui est ouvert à son extrémité tournée vers le moyen de transfert pour éjecter le piston de serrage (18), et **en ce que** le point de fuite (25) est réalisé dans le boîtier (17) et/ou sur le piston de serrage (18).

4. Dispositif de serrage selon la revendication 3, **caractérisé en ce que** le point de fuite (25) présente plusieurs trous de sortie de fluide (26) juxtaposés à distance axiale dans le boîtier (17), lesquels peuvent être ouverts ou fermés successivement par l'enveloppe du piston de serrage (18) ou un bandeau de recouvrement (27) disposé sur le piston de serrage (18) en fonction de la position de déplacement du piston de serrage (18).

5. Dispositif de serrage selon la revendication 3, **caractérisé en ce que** le point de fuite (25) est formé par une portion de piston de forme conique (181) du piston de serrage (18) pénétrant dans la chambre de pression (23) et par une ouverture de sortie de fluide (33) disposée dans le boîtier (17) dans la région de la course de déplacement de la portion de piston de forme conique (181).

6. Dispositif de serrage selon la revendication 3, **caractérisé en ce que** le point de fuite (25) est formé par une rainure axiale (30) disposée dans le boîtier (17), ouverte vers le piston de serrage (18), qui se termine librement à l'extrémité de sortie du piston du boîtier (17) et qui présente, dans une portion de rainure (281 ; 2.81') tournée vers la base de la chambre de pression (23) limitée par le boîtier (17), une profondeur de rainure qui peut diminuer par échelons ou en continu vers la base de la chambre de pression (23).

7. Dispositif de serrage selon la revendication 3, **caractérisé en ce que** le point de fuite (25) est formé par plusieurs rainures axiales (291, 292, 293) disposées dans le boîtier (17) et ouvertes vers le piston de serrage (18), qui sont décalées les unes par rapport aux autres dans la direction périphérique et qui se terminent librement à l'extrémité de sortie du piston du boîtier (17), et **en ce qu'**une des rainures axiales (291) s'étend jusqu'à proximité de la base de la chambre de pression (23) limitée par le boîtier (17) et les longueurs axiales des autres rainures axiales (292, 293) sont réduites par échelons.

8. Dispositif de serrage selon la revendication 3, **caractérisé en ce que** le point de fuite (25) est formé par une rainure axiale (30) disposée dans l'enveloppe du piston de serrage (18), ouverte vers le boîtier (17), qui s'étend sur toute la longueur axiale du piston de serrage (18) et dont la profondeur de rainure diminue par échelons ou en continu dans la région d'extrémité du piston de serrage (18) opposée à la chambre de pression (23).

9. Dispositif de serrage selon la revendication 3, **caractérisé en ce que** le point de fuite (25) est formé par plusieurs rainures axiales (311, 312, 313) disposées dans l'enveloppe du piston de serrage (18) et ouvertes vers le boîtier (17), qui sont décalées les unes par rapport aux autres dans la direction périphérique et qui se terminent librement dans la chambre de pression (23), et **en ce que** l'une des rainures axiales (311) s'étend approximativement sur toute la longueur axiale du piston de serrage (18) et les longueurs axiales des autres rainures axiales (312, 313) sont réduites par échelons.

10. Dispositif de serrage selon la revendication 3, **caractérisé en ce que** le point de fuite (25) est formé par une rainure axiale (32) disposée dans le boîtier (17), ouverte vers le piston de serrage (18), qui se termine librement à l'extrémité de sortie du piston du boîtier (17) et qui s'étend avec une profondeur de rainure qui augmente en continu depuis l'extrémité de sortie du piston du boîtier (17) jusque dans la chambre de pression (23), et par une portion de piston de forme conique (181) réalisée sur le piston de serrage (18), qui pénètre dans la chambre de pression (23).

11. Dispositif de serrage selon l'une quelconque des revendications 1 à 10, **caractérisé en ce que** dans le chemin de transfert de force de serrage entre le piston de serrage (18) et le moyen de transfert, on dispose un piston de compensation de longueur (34) compensant des allongements du moyen de transfert.

12. Dispositif de serrage selon la revendication 11, **caractérisé en ce que** le piston de compensation de longueur (34) est sollicité par ressort dans la direction du moyen de transfert et forme conjointement avec le piston de serrage (18) une deuxième chambre de pression (39), **en ce que** la deuxième chambre de pression (39) peut être remplie par le biais d'une deuxième soupape de non retour (43) avec le fluide sous pression d'alimentation et **en ce que** dans la course de déplacement du piston de serrage (18), on dispose une butée (36) qui bloque le piston de serrage (18) dans une position de déplacement permettant un taux de fuite maximal.

13. Dispositif de serrage selon la revendication 11 ou 12, **caractérisé en ce que** le piston de compensation de longueur (34) est guidé de manière déplaçable axialement sur une portion de piston (182) du piston de serrage (18), et est rendu étanche par rapport à cette portion de piston (182).

14. Dispositif de serrage selon la revendication 13, **caractérisé en ce que** le piston de compensation de longueur (34) est guidé en outre de manière déplaçable axialement dans le boîtier (17), en sortant de celui-ci à l'extrémité ouverte du boîtier, et **en ce que** le piston de compensation de longueur (34) et le piston de serrage (18) sont rendus étanches par rapport à la paroi de boîtier du boîtier (17).

15. Dispositif de serrage selon l'une quelconque des revendications 12 à 14, **caractérisé en ce qu'**un deuxième ressort de pression (40) reçu à l'intérieur du piston de compensation de longueur (34) s'appui d'une part sur le piston de serrage (18), de préférence sur le côté frontal de la portion de piston (182) du piston de serrage (18) de diamètre réduit, et d'autre part sur le piston de compensation de longueur (34).

16. Dispositif de serrage selon l'une quelconque des revendications 12 à 15, **caractérisé en ce que** la deuxième soupape de non retour (43) est disposée entre la première et la deuxième chambre de pression (23, 39).

17. Dispositif de serrage selon la revendication 16, **caractérisé en ce que** la deuxième soupape de non retour (43) est intégrée dans le piston de serrage (18).

18. Dispositif de serrage selon la revendication 17, **caractérisé en ce que** la deuxième soupape de non retour (43) est disposée dans un canal axial (42) réalisé dans le piston de serrage (18), lequel se termine librement des deux côtés frontaux du piston de serrage (18).
